Europäisches Patentamt

European Patent Office

Office européen des brevets

(11) Publication number: **0 117 634**
**B1**

## (12) EUROPEAN PATENT SPECIFICATION

(45) Date of publication of patent specification: **28.10.87**

(21) Application number: **84300493.8**

(22) Date of filing: **26.01.84**

(51) Int. Cl.⁴: **C 10 G 1/02,** C 10 G 9/28,
B 01 J 8/26

(54) Apparatus for contacting fluids and particulate materials.

(30) Priority: **28.01.83 AU 7814/83**

(43) Date of publication of application:
**05.09.84 Bulletin 84/36**

(45) Publication of the grant of the patent:
**28.10.87 Bulletin 87/44**

(84) Designated Contracting States:
**AT BE CH DE FR GB IT LI LU NL SE**

(56) References cited:
**EP-A-0 116 425**
**GB-A- 672 080**
**GB-A-2 063 702**
**US-A-3 297 562**
**US-A-3 346 481**
**US-A-3 546 092**
**US-A-3 708 552**

(73) Proprietor: **SOUTHERN PACIFIC PETROLEUM N.L.**
**143 Macquarie Street**
**Sydney New South Wales 2000 (AU)**
(73) Proprietor: **CENTRAL PACIFIC MINERALS N.L.**
**143 Macquarie Street**
**Sydney New South Wales 2000 (AU)**

(72) Inventor: **Nicklin, Donald James**
**30 Scott Street**
**Corinda Queensland 4075 (AU)**

(74) Representative: **Burnside, Michael et al**
**Michael Burnside & Partners 2 Serjeants' Inn**
**Fleet Street**
**London EC4Y 1HL (GB)**

**Description**

This invention relates to an apparatus for contacting fluid and particulate material. The invention has application to a broad range of processes and it embodies the generic concept of fluidizing a particulate material in a manner such that the material is induced to circulate through two or more chambers and, in so doing, make contact with fluid or other particulate matter in the respective chambers.

The apparatus is particularly adapted for use in the pyrolysis of particulate material by a continuous process utilising heat medium particles. Throughout this specification where the term "continuous process" is used it is to be understood to refer to a process as distinct from a batch process and may, for example, include the intermittent feed of fresh material into the process system.

A system for the pyrolysis of oil shale is described in U.S.—A—3,346,481 which describes a retort wherein finely ground and preheated oil shale is conveyed by a carrier gas through a number of chambers, and heat is provided electrically to liberate the shale oil and gaseous products. The device permits the sensible heat in the gas to be recovered (by preheating the feed shale), and similarly the sensible heat in the spent shale is recovered by intimately mixing with the feed shale. This mixing is before the final crushing of the feed is completed so that the two streams can be readily separated using a screen. The solids are conveyed through the system in suspension in a carrier gas and so they are not conventionally fluidized.

It is desirable to provide apparatus for the pyrolysis of particular material which will enable that material to be heated in an efficient and yet simple manner without the necessity for the use of complex transfer or heating equipment.

It is therefore an object of the present invention to provide apparatus for the pyrolysis of particulate material which will go at least part of the way toward meeting the foregoing desiderata in a simple yet effective manner, or which will at least provide the public with a useful choice.

According to the present invention there is provided apparatus for the pyrolysis of particulate material by a continuous process utilising heat medium particles, said apparatus comprising:

(a) a combustion chamber in which, in use of the apparatus, heat medium particles are heated,

(b) a pyrolysis chamber disposed in juxtaposed relationship to the combustion chamber and in which, in use of the apparatus, particulate material in the form of fresh feed material is contacted in heat exchange relationship with heat medium particles previously heated in the first chamber,

(c) at least one first passageway extending between the upper regions of the combustion and pyrolysis chambers to permit passage of material between the upper reaches of the chambers, the first passageway incorporating a downwardly facing chute,

(d) at least one second passageway extending between the combustion and pyrolysis chambers to permit return passage of material between the chambers,

(e) means for admitting a combustion supporting fluid to the combustion chamber at a rate such that it will induce fluidization of material contained in the combustion chamber,

(f) means for admitting particulate feed material to the pyrolysis chamber,

(g) means for conveying from the apparatus gas vapour products which are generated in the pyrolysis chamber, and

(h) means for inducing fluidization in the combustion chamber in a manner such that the fluidized material is caused to migrate through the chambers by way of the first and second passageways.

Preferably said return passage is located in the lower part of the two chambers.

Alternately the return passage comprises a second upper interconnection at a location remote from the first said upper interconnection.

Preferably said removal means is located in the combustion chamber.

Preferably the pyrolysis chamber is shaped with at least one upwardly inwardly converging side wall causing an upward acceleration of the fluidized particulate material therein toward the first upper interconnection.

Preferably the side wall of the pyrolysis chamber below the first upper interconnection is provided with an inwardly upwardly sloping wall arranged to promote the upward movement of particulate material and entrain gas bubbles causing particulate material entering the pyrolysis chamber through the first upper interconnection to be entrained in an upward movement for circulation and mixing within the pyrolysis chamber.

Notwithstanding any other forms that may fall within its scope, one preferred form of the invention and variations thereof will now be described by way of example only with reference to the accompanying drawings in which:—

Fig. 1 is a diagrammatic cross-sectional elevation of apparatus for the pyrolysis of particulate material according to the invention;

Fig. 2 is a diagrammatic cross-sectional elevation of a third alternative form of apparatus providing for separate flow paths of gas and/or vapour entering and exiting from the apparatus;

Fig. 3 is an enlarged cross-sectional elevation of the passages between the chambers of the apparatus shown in Fig. 2;

Fig. 4 is a schematic plan view of an alternative layout of the two chambers;

Fig. 5 is a schematic plan view of an alternative configuration providing for plug flow; and

Fig. 6 is a schematic plan view of a still further alternative configuration.

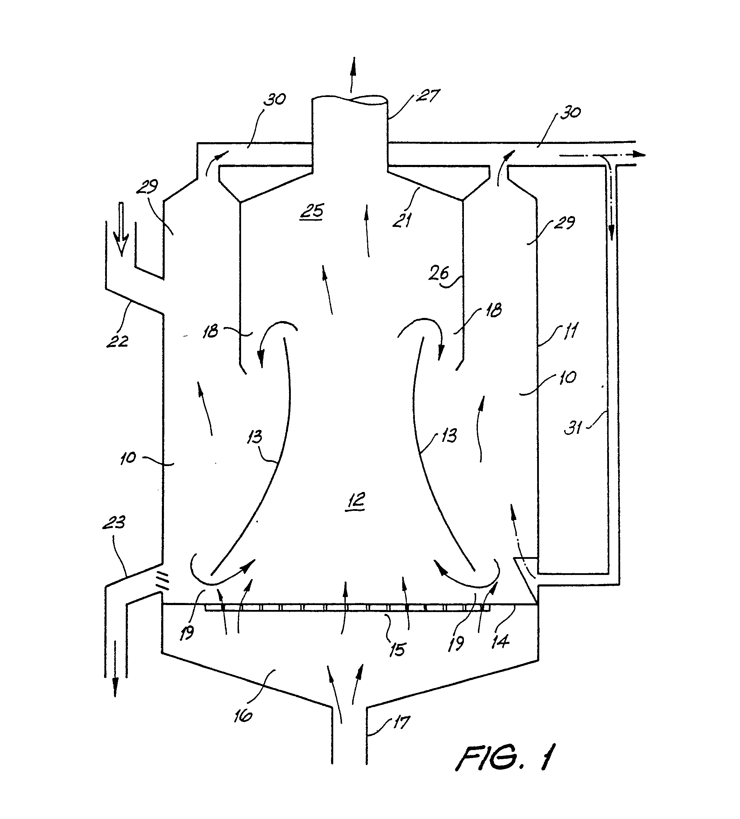

The invention will firstly be described with reference to Fig. 1 in which a simple form of retorting device is described in which the invention may be put into effect.

As shown in Figure 1, the retorting device comprises a pyrolysis chamber in the form of an outer cylindrical chamber 10, which is defined by a wall 11, and an inner combustion chamber 12. The inner chamber 12 is defined by a wall 13 which has a generally frusto-conical form.

The two chambers 10 and 12 are located above a base 14 which incorporates a central apertured or grid-type plate 15 through which air is passed in use of the retort. Air is directed into the chambers 10 and 12, by way of the plate 15, from a lower chamber 16 which is connected to a source of pressurised air by a pipe 17.

Upper and lower passages 18 and 19 connect the two chambers 10 and 12. Such passages permitting free flow of material between the chambers in the direction indicated by the heavy arrows.

The upper region 25 of the central combustion chamber 12 is encircled by a cylindrical wall 26, and a duct 27 which communicates with the upper chamber region 25 is employed for extracting waste gases of the combustion which occurs within the central chamber 12.

The wall 26 also forms an inner wall of an annular chamber 29 which is located above the outer pyrolysis chamber 10 and two outlet ducts 30 are provided for conveying from the retort product vapours and gases which are released as a result of heat exchange between fresh feed material and recirculated heat medium material in the outer chamber 10.

Additionally, a product return line 31 may be provided for directing a proportion of the product gas and vapour back into the outer chamber 10, for use as a fluidizing medium and/or for product improvement. An inlet passage 22 enters the chamber 10 through wall 11. The inlet passage 22 provides for admission of feed material to the outer chamber 10 of the retort.

An outlet conduit 23 is provided adjacent the bottom of the outer chamber 10 for bleeding spent feed material from the retort.

In operation of the retort, fresh feed material such as coal or oil shale in particulate form is admitted to the outer chamber 10 by way of the inlet passages 22 and is contacted with heat medium material which has previously been passed through and heated in the inner chamber 12. During the time that the material is resident in the outer chamber 10 it is maintained in a fluidized state by air which is admitted to the chamber by way of the grid 15 and/or by gaseous and vapour products which are released by the feed material as a result of heat exchange between the heat medium material and the feed material.

Whilst in the fluidized state, the feed material in the outer chamber 10 migrates toward the bottom of the chamber and then passes through the passageway 19 to enter the inner chamber 12. Having entered the inner chamber, the material is subjected to further fluidization by the air which enters through the grid 15 and the fluidized particles are subjected to an upward accelerating force. The upward accelerating force is produced as a result of the geometrical form of the wall 13, which causes the air and entrained particles to increase in velocity with increased height of movement through the chamber 12.

Having passed through the outer pyrolysis chamber 10 and having been stripped of product vapours and gases as a result of heat gained from the heat medium material, the particles will enter the inner chamber 12 in a heated condition and with residual surface carbon on the particles. This residual carbon is combusted in the inner combustion chamber 12 when exposed to the combustion supporting air which is admitted through the grid 15 and will be heated to a higher level during passage thereof through the inner chamber.

Having moved upwardly through the inner chamber 12, the heated particles then flow through the upper passageway 18 to enter the outer chamber 10 as heat medium material for further heat exchange contact with fresh feed material which enters the outer chamber through the inlet passages 22.

The cycle is repeated with continuous circulation of the material through and between the two chambers 10 and 12. As abovementioned, the circulation is induced by the profiling of the wall 13 and/or the position of the upper interconnecting passage 18 and no mechanical aid to circulation is employed.

Spent feed material is progressively bled from the lower region of the outer chamber by way of removal means in the form of outlet conduit 23. The rate of bleeding of the spent material is balanced with the infeed of fresh feed material, so as to maintain a constant volume of material within the retort and so as to maintain optimum recovery of product vapours and gases from the material in the outer chamber 10.

The upwardly mobile product gases and vapours from the outer chamber 10 are collected in and carried from the retort by way of the ducts 29, 30 and the waste gases of combustion in the inner chamber 12 pass out through the duct 27.

Start-up of the retort is effected by flame heating the material within the retort until the required operating condition are reached. The operating temperatures might typically be 550°C in the outer chamber 10 and 900°C in the inner chamber 12.

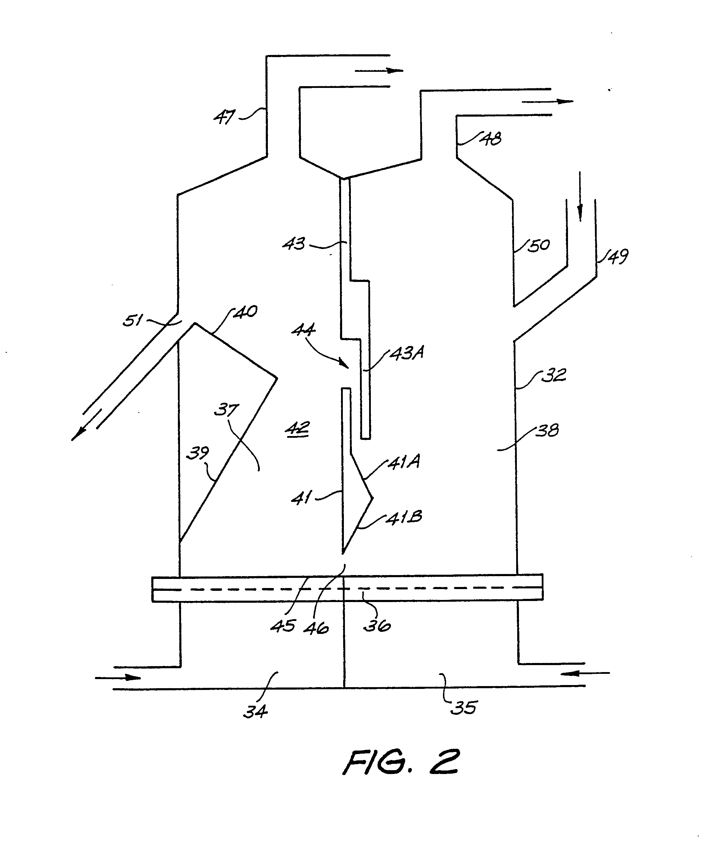

The retort device which is illustrated in Figure 2 of the drawings comprises a housing 32 which is mounted above two partitioned cavities 34 and 35. The housing 32 has a generally rectangular cross-section, as viewed in plan, and a mesh-type grid 36 is interposed between the cavities and the housing.

The housing is divided into first and second chambers 37 and 38, which may be referred to respectively as combustion and pyrolysis chambers, and the first chamber is configured such that its cross-sectional area decreases over approximately two-thirds of the height of the chamber. Thus, the first chamber 37 is defined by one wall 39 which inclines inwardly and upwardly and which intersects a downwardly inclined ledge 40 forming a throat 42 in the combustion chamber.

The two chambers 37 and 38 are separated by a partition wall, 41, 43 in which is provided an upper interconnection 44 and a lower interconnection 46. The upper interconnection comprises an opening between the lower part 41 of the partition wall and the upper part 43 and is located in the region of the throat 42. The upper interconnection 44 extends through the wall and then downwardly in a parallel sided portion formed by a baffle 43A. In this manner a passageway is formed extending between the upper reaches of the combustion chamber 37 and the pyrolysis chamber 38.

The dividing wall 41 terminates short of the base 45 of the housing and defines a second passageway 46 which permits communication between the lower reaches of the first and second chambers.

Two exhaust ducts 47 and 48 are located above the first and second chambers 37 and 38, and a feed material inlet 49 extends into a side wall 50 of the housing. Additionally, an outlet 51 for spent feed material is located in the combustion chamber, preferably toward the upper edge of the ledge 40.

In operation of the apparatus shown in Figure 2, feed material in particulate form is loaded into the two chambers and, ignoring start-up conditions, residual carbon in the material in the first chamber 37 is combusted by exposing the (already hot) material to combustion supporting air. The air is delivered to the first chamber 37 by way of the cavity 34 and at a pressure sufficient to fluidize the particles in the first chamber. Fluidization is maintained at a level sufficient to sustain the particles in a fluidized state, but the pressure of the admitted air is not so great as to cause entrainment and exhausting of significant quantities of the particles.

Due to the profiling of the first chamber 37 and the consequential existence of upwardly accelerating fluid forces, the fluidized particles within the first chamber are moved progressively upwardly through the chamber and they then spill over the lip of the wall 41 to enter the second chamber 38 by way of the first passageway 44. On entering the second chamber 38, the particles have a high temperature, resulting from retained heat of combustion of the residual carbon of the particles. Thus, the particles may be referred to as "heat medium particles".

Gaseous products of the combustion process are exhausted through the duct 47 and, being upwardly mobile, tend not to enter the second chamber 38 with the heat medium particles.

On entering the second chamber 38, the heat medium particles react with fresh feed material, which is admitted to the second chamber 38 by the feed inlet 49, and the consequential heat exchange between the particles causes gas and vapour products to be released from the feed material at all levels throughout the chamber 38. The released gas and vapour products tend to induce fluidization of the heat medium and feed particles within the second chamber 38 but, if the fluidizing effect of such products is insufficient to cause a required level of fluidization, a sup-plementary fluidizating medium may be admitted to the chamber 38 by way of the cavity 35.

The gas and vapour products which are released in the reaction bed within the chamber 38 are exhausted through the duct 48 and, if required, a portion of the exhausted gas and vapour products may be fed back into the second chamber 38, by way of the cavity 35, to act as the fluidizing medium.

The particles within the second chamber 38 are induced to move progressively downwardly through the chamber, as a consequence of the upward movement of the particles in the first chamber 37 and the particles are thereby induced to pass through the passageway 46 to enter the first chamber 37.

Thus, as in the previously described embodiments of the invention, the fresh feed material and the heat medium material is circulated through the retort without the assistance of any mechanical contrivances.

A proportion of the spent material which passes into the combustion chamber 37 is removed from that chamber by way of the outlet 51, so that the total volume of material within the two chambers 37 and 38 remains substantially constant with addition of the fresh feed material.

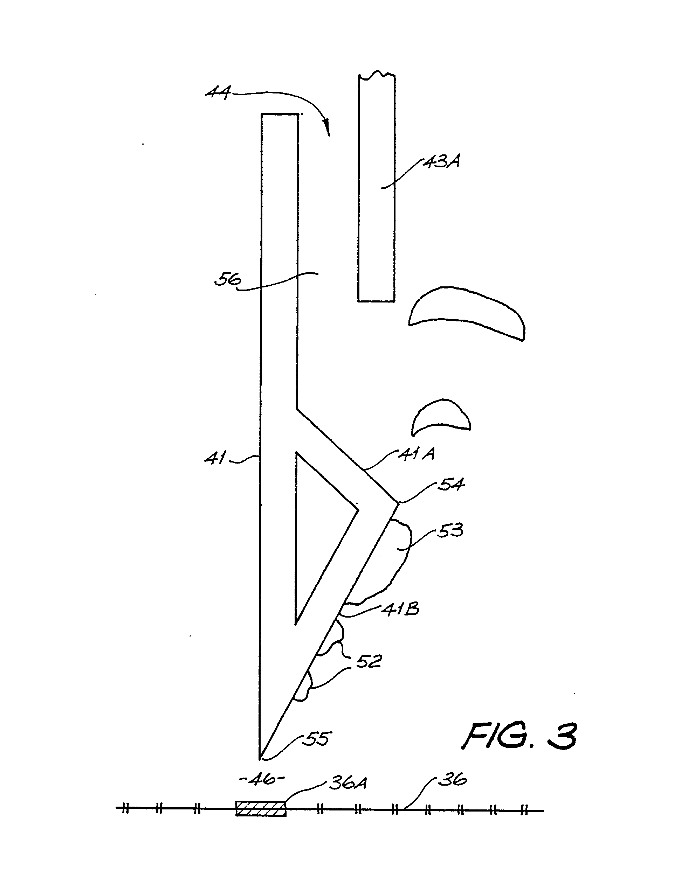

The pyrolysis chamber side of the lower dividing wall 41 is also profiled to a particular configuration as may be most clearly seen in Figure 3. The lower edge of the wall 41 is brought to a wedge-like configuration immediately above the passageway 46 and is provided with an upwardly inwardly inclined surface 41B protruding into the pyrolysis chamber. This surface is terminated by an upwardly outwardly inclined shelf 41A located below the outlet from the passageway 44. This configuration has the advantage that bubbles 52 from the gas inlet grille 36 or from the pyrolysis reaction form on the sloping surface 41B and enlarge as shown at 53 while travelling upwardly along the surface. The bubbles break away from the surface at the intersection point 54 creating a highly aerated zone at the exit from the passageway 44. Solids emerging from the passageway 44 are drawn into the wake of the bubbles in an outward direction giving rise to overall circulation in the fluidized bed. This configuration helps to prevent the solids "short circuiting", i.e. proceeding directly from the outlet from the passageway 44 to the lower interconnection 46.

It is a further feature of the lower wall configuration that the sharp tip 55 allows the use of a small non-aerated zone 36A in the gas inlet grille 36. The small non-aerated zone means that a low clearance can be used between the tip 55 and the grille 36, helping to prevent the undesired passage of gases from one chamber to the other. Should it be found that gas mixing from one chamber to the other is a problem then it is possible to inject an inert gas such as steam into the locality of the passageway 46 (and in some cases even into the upper connecting passage 44) to block the gas transfer.

It is also desirable that the upper interconnecting passageway 44 is provided through a downwardly facing chute 56 to ensure low gas leakage. The chute preferably has parallel or diverging sides so that solids will not become jammed and the chute can therefore be narrowed to inhibit gas leakage.

Although the invention has been described thusfar in the context of retorting devices, it is to be understood that the invention does have other applications. Some of these envisaged applications are as follows.

(a) Oil shale retorting.

(b) Gasification of solid fuels, particularly very high ash material.

(c) Hydrogen generation — particularly from high ash material such as spent shale, washery waste.

(d) Waste heat recovery from very dirty gas streams. The gas gives its heat to a solid which is transferred to another chamber where it is used to preheat another gas stream.

(e) Filtration: The solids in a dirty flue gas are trapped in one chamber, and blown off in the other.

(f) Flue gas cleaning. $SO_2$ is absorbed in one chamber and desorbed in another for recovery.

(g) Recovery of sulphur from pyrites ($FeS_2$). The $FeS_2$ is heated in one chamber to give $FeS + S$ and burnt in the other chamber to give $SO_2 +$ heat. Half the sulphur is recovered as sulphur rather than as $SO_2$.

Hydrogen generation may be effected in a device of the type shown in Figure 2, by admitting particulate coal to the second chamber 38 by way of the feed inlet 49 and by subjecting the coal particles to a fluidizing medium in the form of steam. The steam is admitted to the chamber 38 by way of the lower chamber 35 and the fluidized feed material is contacted with a suitable heat medium material recirculating between the chambers and which has previously been subjected to combustion in the first chamber 37. After reacting the feed and heat medium particles in the presence of steam in the second chamber 38, the particles flow into the first chamber 37 where residual carbon is combusted in the presence of air which is admitted to the chamber 37 by way of the lower chamber 34. This method is particularly suitable for use with high ash coals or spent oil shale.

Products of the combustion, including carbon dioxide and nitrogen, are exhausted through the outlet duct 48. Products of the heat exchange reaction within the second chamber 38, including carbon monoxide, hydrogen and volatile products of coal are exhausted through the outlet duct 47. Gaseous and vapour products additional to hydrogen may be collected for subsequent use.

In certain of the processes in which the apparatus may be employed, such as in gas separation and ion exchange processes, no heating would normally be effected and, thus, it should be understood that the devices illustrated in the drawings need not in all applications be employed as retorts. Also, in certain applications to which the devices may be put, such as in ion exchange processes, the fluids which are directed into the chambers may comprise liquids.

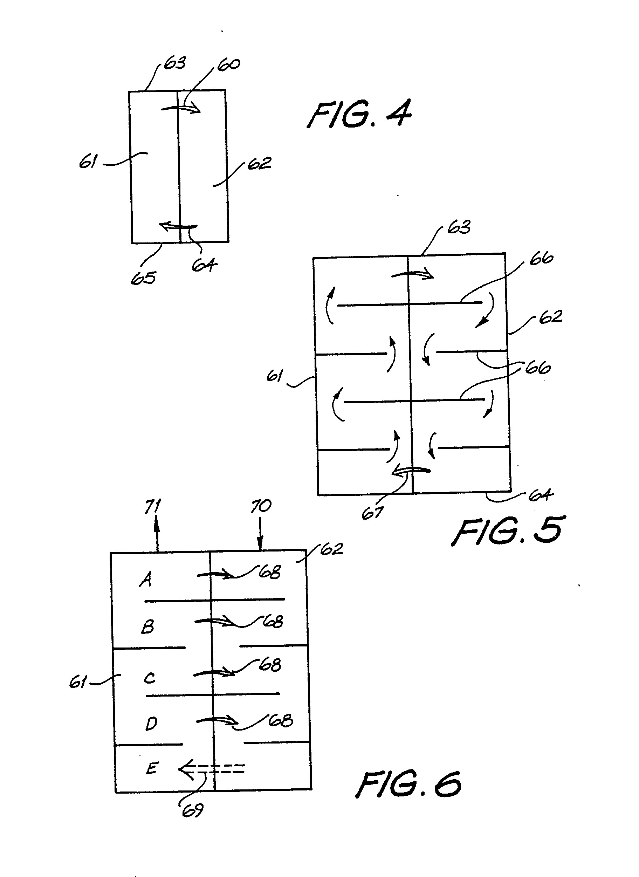

Although the invention has been described thusfar with reference to transfer between the combustion and pyrolysis chambers as taking place through an upper interconnection from the combustion chamber to the pyrolysis chamber and a lower interconnection in the opposite direction, it is also possible to achieve circulation by transfer through two upper interconnections (i.e. by two "overflow" transfers rather than by an "overflow" and "underflow" combination) in which at one end of a rectangular bed solids are thrown from left to right and at the other end solids are thrown from right to left as shown diagrammatically in Figure 4. In this situation solids are overthrown at 60 from the combustion chamber 61 to the pyrolysis chamber 62 adjacent one end 63 and are returned, also by overflow 64 adjacent the other end 65.

Simplified theory of fluidized beds often assumes that the beds are "perfectly mixed". Hence a small cluster of particles entering the bed will immediately be dispersed. This is one extreme theoretical model. Another is so-called "plug flow" in which the cluster of solids maintains its identity as it flows through the bed in the shortest possible journey. Sometimes "perfect mixing" is desirable, sometimes plug flow, and sometimes a hybrid. In any event it is always desirable to be able to "dial in" whatever level of mixing is required.

In the first version of the invention, solids leave one chamber via the top of the bed ("overflow") and re-enter at the bottom ("underflow"), and both chambers approximate perfect mixing.

The "double overflow" system as shown basically in Figure 5 opens up the possibility of achieving something approaching plug flow in the system using a series of baffles as shown in Figure 5. In this situation the configuration of the chambers is basically as shown in Figure 4 with the addition of staggered baffles 66. This forms a tortuous path in each chamber inducing plug flow between the baffles as shown by the single arrows in Figure 5. The more baffles that are provided the closer is the approximation to plug flow. Although the configuration shown in Figure 5 incorporates "double overflow" it will be appreciated that the return flow 67 could equally be an underflow return of the type shown in Figures 1 to 3.

A further configuration using "multiple overflow" between baffle chambers is shown diagrammatically in Figure 6 having a similar configuration to that of Figure 5 but incorporating multiple overflow interconnections 68. The return flow could be by way of "underflow" 69. This configuration is particularly applicable to oil shale retorting in which the raw feed shale is fed into the pyrolysis chamber 62 at 70 and the spent shale is withdrawn from the combustion chamber 61 at 71. The baffles divide the system into five chambers A, B, C, D and E. In chambers A, B, C, and D we have overflow left to right as shown in Figure 6 and in chamber E we have return underflow right to left. The individual chambers can be designed to achieve different circulation rates in each chamber; the baffles ensure that the solids are no longer perfectly mixed but approach plug flow.

In practice this means that any temperature profile can be achieved in the retort to optimize the yield. Thus chamber A might be run at a relatively low temperature to protect sensitive species; and the temperatures could be increased in the chambers B, C, D to drive off all the product. Thus we have the high yields associated with high temperature, and the benefits of a gradual and controlled temperature increase.

There is an additional advantage that the approach to plug flow achieves: The shale entering the system would not be able to pass quickly through the retort (no by-passing) and this means the losses associated with by-passing would be reduced.

Similarly in the combustion chamber, the losses of carbon fuel on the spent shale would be reduced because spent shale could not by-pass the system.

Hence this system would seem to offer prospects of very high yields and very high recovery of the energy values of the spent shale.

**Claims**

1. Apparatus for the pyrolysis of particulate material by a continuous process utilising heat medium particles, said apparatus comprising:

(a) a combustion chamber (37) in which, in use of the apparatus, heat medium particles are heated,

(b) a pyrolysis chamber (38) disposed in juxtaposed relationship to the combustion chamber and in which, in use of the apparatus, particulate material in the form of fresh feed material is contacted in heat exchange relationship with heat medium particles previously heated in the first chamber,

(c) at least one first passageway (44) extending between the upper regions of the combustion and pyrolysis chambers to permit passage of material between the upper reaches of the chambers, the first passageway incorporating a downwardly facing chute (56),

(d) at least one second passageway (46) extending between the combustion and pyrolysis chambers to permit return passage of material between the chambers,

(e) means (34) for admitting a combustion supporting fluid to the combustion chamber (37) at a rate such that it will induce fluidization of material contained in the combustion chamber,

(f) means (49) for admitting particulate feed material to the pyrolysis chamber (38).

(g) means (48) for conveying from the apparatus gas vapour products which are generated in the pyrolysis chamber (38), and

(h) means for inducing fluidization in the combustion chamber in a manner such that the fluidized material is caused to migrate through the chambers by way of the first and second passageways.

2. Apparatus as claimed in claim 1, wherein there is provided an inclined shelf (41A) located at the lower end of the chute (56) and extending from one inside wall of the chute downwardly and transversely across beneath the lower end of the chute.

3. Apparatus as claimed in either claim 1 or claim 2, wherein the second passageway (46) is located in the lower part of the two chambers.

4. Apparatus as claimed in claim 1 or claim 2, wherein the second passageway (64) extends between the upper regions of the combustion (61) and pyrolysis (62) chambers at a location remote from the first passageway (60), the second passageway (64) also incorporating a downwardly facing chute.

5. Apparatus as claimed in any one of the preceding claims, wherein the migration of the material is assisted by profiling the walls (39, 41) of the combustion chamber in a manner such that the velocity of flow of the combustion supporting fluid increases as it moves upwardly through the combustion chamber (37).

6. Apparatus as claimed in claim 5, wherein the combustion chamber (37) is shaped with at least one upwardly inwardly converging side wall (39) causing an upward acceleration of the fluidized particulate material therein toward the first passageway (44).

7. Apparatus as claimed in claim 2, wherein the downwardly facing chute (56) is formed in a partition wall (41) between the combustion and pyrolysis chambers, the inclined shelf (41A) extending transversely outwardly from the partition wall into the pyrolysis chamber (38) beneath the lower end of the chute (56), and wherein the partition wall below the inclined shelf incorporates an inclined surface (41B) sloping transversely inwardly toward the partition wall downwardly from the lower edge of the inclined shelf (41A), the said inclined surface (41B) promoting the upward movement of particulate material and entrained gas bubbles (52, 53) causing particulate material entering the pyrolysis chamber (38) through the chute (56) to be entrained in an upward movement for circulation and mixing within the pyrolysis chamber.

8. Apparatus as claimed in claim 4, wherein a plurality of baffles (66) are provided in the pyrolysis chamber (62) between the first passageway and the second passageway arranged to induce an approximate plug flow situation in the pyrolysis chamber from the location of the first passageway (60) to the location of the second passageway (67).

9. Apparatus as claimed in claim 8, wherein the baffles divide the pyrolysis chamber (62) into a plurality of sub-chambers, and wherein a plurality of upper level passageways (68), each incorporating a downwardly facing chute, are provided from the combustion chamber (61) into respective sub-chambers allowing material heated in the combustion chamber to be introduced to fresh feed material in the pyrolysis chamber (62) at various stages in the plug flow therein.

**Patentansprüche**

1. Ein Apparat zur Pyrolyse von Partikelmaterial mit Hilfe eines kontinuierlichen Verfahrens, in dem Wärmemediumpartikel eingesetzt werden, wobei der genannte Apparat umfaßt:

a) eine Verbrennungskammer (37), in der bei in Einsatz befindlichem Apparat Wärmemediumpartikel erhitzt werden,

b) eine Pyrolysekammer (38), die direkt neben der Verbrennungskammer angeordnet ist, in der bei in Einsatz befindlichem Apparat zur Erzielung eines Wärmeaustausches Partikelmaterial in Form von frischem Einsatzmaterial mit vorher in der ersten Kammer erhitzten Wärmemediumpartikeln in Berührung gebracht wird,

c) zumindest einen erste Durchgang (44), der sich zwischen den oberen Bereichen der Verbrennungs- und Pyrolysekammern erstreckt, um einen Materialdurchgang zwischen den oberen Bereichen der Kammern zu ermöglichen, wobei der erste Durchgang einen nach unten ausgerichteten Auslauf (56) umfaßt,

d) zumindest einen zweiten Durchgang (46), der sich zwischen den Verbrennungs- und Pyrolysekammern erstreckt, um eine Rückführung des Materials zwischen den Kammern zu ermöglichen,

e) eine Vorrichtung (34), mit deren Hilfe ein die Verbrennung förderndes Medium der Verbrennungskammer (37) in einer solchen Menge zugeführt werden kann, daß dadurch eine Fluidisierung des in der Verbrennungskammer befindlichen Materials bewirkt wird,

f) eine Vorrichtung (49), mit deren Hilfe Partikeleinsatzmaterial der Pyrolysekammer (38) zugeführt werden kann,

g) eine Vorrichtung (48), mit deren Hilfe aus dem Apparat Gasdämpfeprodukte abgezogen werden können, die in der Pyrolysekammer (38) entstehen, und

h) eine Vorrichtung, mit deren Hilfe eine solche Fluidisierung in der Verbrennungskammer bewirkt werden kann, daß das fluidisierte Material dazu veranlaßt wird, über die ersten und zweiten Durchgänge durch die Kammern zu migrieren.

2. Ein Apparat gemäß Anspruch 1, wobei ein geneigt angeordnetes Blech (41A) am unteren Ende des Auslaufs (56) vorgesehen ist, das sich von einer Innenwand des Auslaufs ausgehend nach unten und quer bis unter das untere Ende des Auslaufs erstreckt.

3. Ein Apparat gemäß Anspruch 1 oder Anspruch 2, wobei der zweite Durchgang (46) im unteren Teil der beiden Kammern angeordnet ist.

4. Ein Apparat gemäß Anspruch 1 oder Anspruch 2, wobei der zweite Durchgang (64) zwischen den oberen Bereichen der Verbrennungskammer (61) und der Pyrolysekammer (62) in einiger Entfernung vom ersten Durchgang (60) angeordnet ist, und wobei der zweite Durchgang (64) ebenfalls einen nach unten ausgerichteten Auslauf umfaßt.

5. Ein Apparat gemäß irgendeinem der vorstehenden Ansprüche, wobei die Migration des Materials durch die Profilierung der Wände (39, 41) der Verbrennungskammer so gefördert wird, daß die Strömungsgeschwindigkeit des die Verbrennung fördernden Mediums zunimmt, während sich das Medium durch die Verbrennungskammer (37) nach oben bewegt.

6. Ein Apparat gemäß Anspruch 5, wobei die Verbrennungskammer (37) so geformt ist, daß sie zumindest eine nach oben und innen zusammenlaufende Seitenwand (39) umfaßt, mit deren Hilfe eine nach oben ausgerichtete Beschleunigung des fluidisierten Partikelmaterials in Richtung auf den ersten Durchgang (44) bewirkt wird.

7. Ein Apparat gemäß Anspruch 2, wobei der nach unten ausgerichtete Auslauf (56) in einer Trennwand (41) zwischen den Verbrennungs- und Pyrolysekammern ausgebildet ist, wobei sich das geneigt angeordnete Blech (41A) von der Trennwand ausgehend quer nach außen in die Pyrolysekammer (38) hinein unter das untere Ende des Auslaufs (56) erstreckt, und wobei die Trennwand unterhalb des geneigt angeordneten Blechs eine geneigte Fläche (41B) umfaßt, die quer nach innen in Richtung auf die Trennwand von der unteren Kante des geneigt angeordneten Blechs (41A) ausgehend mit nach unten ausgerichteter Neigung vorgesehen ist, wobei die genannten geneigte Fläche (41B) die nach oben verlaufende Bewegung des Partikelmaterials und mitgerissener Gasblasen (52, 53) unterstützt, so daß durch den Auslauf (56) in die Pyrolysekammer (38) eintretendes Partikelmaterial in einer nach oben verlaufenden Bewegung mitgerissen wird, um so einen Umlauf und eine Vermischung innerhalb der Pyrolysekammer zu gewährleisten.

8. Ein Apparat gemäß Anspruch 4, wobei eine Vielzahl von Leitblechen (66) in der Pyrolysekammer (62) zwischen dem ersten Durchgang und dem zweiten Durchgang so angeordnet sind, daß in der Pyrolysekammer im Bereich zwischen dem ersten Durchgang (60) und dem zweiten Durchgang (67) in etwa Pfropfenströmungsverhältnisse entstehen.

9. Ein Apparat gemäß Anspruch 8, wobei die Leitbleche die Pryolsekammer (62) in eine Vielzahl von Unterkammern aufteilen, und wobei eine Vielzahl von oberen Durchgängen (68) mit jeweils einem nach unten ausgerichteten Auslauf von der Verbrennungskammer (61) ausgehend in die entsprechenden Unterkammern hinein verlaufen, um es so zu ermöglichen, daß in der Verbrennungskammer erhitztes Material dem frischen Einsatzmaterial in der Pyrolysekammer (62) auf verschiedenen Ebenen der darin ablaufenden Pfropfenströmung zugegeben werden kann.

**Revendications**

1. Dispositif pour la pyrolyse d'un matériau particulaire par un procédé continu utilisant des particules d'un agent de chauffage, ledit dispositif comprenant:

a) une chambre de combustion (37) dans laquelle, lorsque l'appareil est en fonctionnement, les particules de l'agent de chauffage sont chauffées;

b) une chambre de pyrolyse (38) disposée en relation de juxtaposition avec la chambre de chauffage et dans laquelle, lorsque le dispositif est en fonctionnement, le matériau particulaire sous la forme de matériau d'alimentation frais est mis en contact, en relation d'échange de chaleur, avec les particules de l'agent de chauffage préalablement chauffées dans la première chambre;

c) au moins un premier passage (44) s'étendant entre les régions supérieures de chambres de combustion et de pyrolyse pour permettre le passage de matériau entre les zones supérieures de chambres, le premier passage comportant une cheminée (56) dirigée vers le bas;

d) au moins un second passage (46) s'étendant entre les chambres de combustion et de pyrolyse pour permettre le retour des matériaux entre les chambres;

e) des moyens (34) pour admettre un fluide assurant la combustion dans la chambre de combustion (37) à une vitesse telle qu'il provoque la fluidisation du matériau contenu dans la chambre de combustion;

f) des moyens (49) pour admettre un matériau particulaire d'alimentation dans la chambre de pyrolyse (38);

g) des moyens (48) pour évacuer du dispositif les produits de gaz et de vapeur qui sont dégagés dans la chambre de pyrolyse (38); et

h) des moyens pour provoquer la fluidisation dans la chambre de combustion de telle manière que le matériau fluidisé soit obligé de circuler à travers les chambres par les premier et second passages.

2. Dispositif suivant la revendication 1, dans lequel il est prévu un déflecteur incliné (41A) situé à l'extrémité inférieure de la cheminée (56) et s'étendant a partir d'une paroi intérieure de la cheminée vers le bas et transversalement à travers et en dessous de l'extrémité inférieure de la cheminée.

3. Dispositif suivant la revendication 1 ou la revendication 2, dans lequel le second passage (46) est situé dans la partie inférieure des deux chambres.

4. Dispositif suivant la revendication 1 ou la revendication 2, dans lequel le second passage (64) s'étend entre les régions supérieures des chambres de combustion (61) et de pyrolyse (62) en un endroit éloigné du premier passage (60), le second passage (64) comportant également une cheminée dirigée vers le bas.

5. Dispositif suivant l'une ou l'autre des revendications précédentes, dans lequel la circulation du matériau est favorisée en profilant les parois (39, 41) de la chambre de combustion de telle manière que la vitesse de circulation du fluide assurant la combustion augmente lorsqu'il monte à travers la chambre de combustion (37).

6. Dispositif suivant la revendication 5, dans lequel la chambre de combustion (37) est dotée d'au moins une paroi latérale (39) qui converge intérieurement vers le haut, ce qui provoque une accélération ascendante du matériau particulaire fluidisé, dans cette chambre en direction du premier passage (44).

7. Dispositif suivant la revendication 2, dans lequel la cheminée (56) dirigée vers le bas est formée dans une paroi de séparation (41) entre les chambres de combustion et de pyrolyse, le déflecteur incliné (41A) s'étendant transversalement vers l'extérieur à partir de la paroi de séparation, à l'intérieur de la chambre de pyrolyse (38) en dessous de l'extrémité inférieure de la cheminée (56), et dans lequel la paroi de séparation présente, sous le déflecteur incliné, une surface inclinée (41B) orientée transversalement vers l'intérieur en direction de la paroi de séparation et vers le bas à partir de l'arête inférieure du déflecteur incliné (41A), ladite surface inclinée (41B) favorisant le mouvement ascendant du matériau particulaire et des bulles de gaz entraînées (52, 53) obligeant le matériau particulaire à pénétrer dans la chambre de pyrolyse (38) à travers la cheminée (56) pour être entraîné en un mouvement ascendant assurant sa circulation et son mélange à l'intérieur de la chambre de pyrolyse.

8. Dispositif suivant la revendication 4, dans lequel une pluralité de chicanes (66) sont prévues dans la chambre de pyrolyse (62) entre le premier passage et le second passage, agencées de façon à provoquer une situation d'écoulement approximativement idéal dans la chambre de pyrolyse depuis l'endroit du premier passage (60) jusqu'à l'endroit du second passage (67).

9. Dispositif suivant la revendication 8, dans lequel les chicanes divisent la chambre de pyrolyse (62) en une pluralité de sous-chambres, et dans lequel il est prévu une pluralité de passages supérieurs (68), comportant chacun une cheminée dirigée vers le bas, à partir de la chambre de combustion (61) vers les sous-chambres respectives, permettant au matériau chauffé dans la chambre de combustion d'être introduit dans le matériau d'alimentation frais dans la chambre de pyrolyse (62) à différentes étapes de l'écoulement idéal dans celle-ci.

0 117 634

FIG. 1

1

FIG. 2

0 117 634

FIG. 3

3

FIG. 4

FIG. 5

FIG. 6